# EUROPEAN PATENT SPECIFICATION

(11) **EP 3 154 154 B1**
(45) Date of publication and mention of the grant of the patent: **27.02.2019**
(21) Application number: 16192202.6
(22) Date of filing: 04.10.2016
(51) Int. Cl.: H02K 1/02, H02K 1/16, H02K 3/487

(54) **ELECTRIC MACHINE STATOR LAMINATION WITH DUAL PHASE MAGNETIC MATERIAL**
LAMINIERUNG DES STATORS EINER ELEKTRISCHEN MASCHINE MIT ZWEIPHASIGEM MAGNETISCHEM MATERIAL
TÔLE MAGNÉTIQUE DE STATOR DE MACHINE ÉLECTRIQUE AYANT UN MATÉRIAU MAGNÉTIQUE BIPHASE

(30) Priority: 05.10.2015 US 201514874583
(43) Date of publication of application: 12.04.2017
(73) Proprietor: General Electric Company, Schenectady, NY 12345 (US)
(72) Inventor: GALIOTO, Steven Joseph, Niskayuna, NY 12309 (US); EL-REFAIE, Ayman Mohamed Fawzi, Niskayuna, NY 12309 (US)
(74) Representative: Fischer, Jens Peter

(56) References cited:
- WO-A1-00/67360
- JP-A- H06 113 493
- US-A1- 2008 191 578

## Description

The present invention relates generally to electric machine components and more particularly to an electric machine stator lamination having a dual phase magnetic material.

With certain electric machine applications the machine's rotor rotates at a high tip speed. In some applications the gap between rotor and stator is filled with a gas or fluid, other than air. As a result, a large amount of mechanical loss may be created from the windage or churning of the fluid and/or gas within the air gap between the rotor and stator.

This churn in the rotor stator gap can be mitigated by providing a smooth surface on the interior core surface of the stator and/or the exterior surface of the rotor. Manufacturing challenges remain with the installation of wedges in the slot closures. The wedges lead to a non-smooth interior stator surface.

The use of slot wedges, depending on the material, may exacerbate slot leakage reactance. The lamination can be made from a continuous piece of material in which the area at the top of the slot is "closed" with magnetic lamination material. While this design provides a smoother stator bore, it leads to increased leakage reactance compared with an "open" slot design. Leakage reactance can limit the high speed power capability of electric machines. Leakage reactance can also lead to a low power factor in the electric machine.

In some electric machines the stator teeth are formed of separate components rather than a continuous, monolithic piece. The stator windings are wound around the separate teeth in a concentrated fashion and then installed into the stator to form a stator core having no slot opening remaining at the top of the slot. This method suffers from manufacturing complexity as it is limited to use with concentrated windings.

Accordingly, there is an ongoing need for improving upon electric machine componentry design, performance, and manufacturability.

US2008/191578 A1 describes a stator for an electric machine with laminated metal sheets made from a two-state steel with a high permeability section in a pole teeth region and a low permeability section in a bridge piece region therebetween. JPH 06 113493 A describes a stator with a connecting part for sealing the slots with reduced magnetic permeability. WO 00/67360 A1 describes a stator with parts of a bridge between the slots and the inner surface of the stator having a larger magnetic resistance in the circumferential direction than in the radial direction.

The invention is defined on basis of claim 1.

The present invention overcomes at least some of the aforementioned drawbacks by providing an electric machine stator lamination having a dual phase magnetic material. More specifically, the present invention is directed to provide a stator lamination for use in a stator of an electric machine that offers a lighter electric machine that can attain higher speed, has high efficiency, and an improved power factor with reduced volume, mass, and manufacturing cost and complexity.

Various other features and advantages of the present invention will be made apparent from the following detailed description and the drawings.

The drawings illustrate one embodiment presently contemplated for carrying out the invention.
FIG. 1 is an x-y graph comparing magnetic field strength (x-axis) to flux density (y-axis) for exemplary dual phase magnetic materials.
FIG. 2 is a top view of a stator lamination according to an embodiment of the present invention.
FIG. 3 is a close-up top view of a portion of the stator lamination of FIG. 2.
FIG. 4 is a close-up top view of a portion of the stator lamination of FIG. 3.

Unless defined otherwise, technical and scientific terms used herein have the same meaning as is commonly understood by one of ordinary skill in the art with respect to the presently disclosed subject matter. The terms "first", "second", and the like, as used herein do not denote any order, quantity, or importance, but rather are used to distinguish one element from another. The terms "a", "an", and "the" do not denote a limitation of quantity, but rather denote the presence of at least one of the referenced item, and the terms "front", "back", "bottom", and/or "top", unless otherwise noted, are used for convenience of description only, and are not limited to any one position or spatial orientation.

If ranges are disclosed, the endpoints of all ranges directed to the same component or property are inclusive and independently combinable (e.g., ranges of "up to about 25 wt. %," is inclusive of the endpoints and all intermediate values of the ranges of "about 5 wt. % to about 25 wt. %," etc.). The modified "about" used in connection with a quantity is inclusive of the stated value and has the meaning dictated by the context (e.g., includes the degree of error associated with measurement of the particular quantity). Accordingly, the value modified by the term "about" is not necessarily limited only to the precise value specified.

Aspects of the present invention have been shown to offer advantages over previous electric machine stator componentry design by showing performance benefit of reduced leakage reactance. Aspects provide a method of controlling the leakage inductance and Magneto-Motive Force (MMF) slot harmonics produced by the slot openings or the space between the iron teeth of the electric machine's stator. Ultimately, improvement in power capability and power factor of the electric machine has been demonstrated.

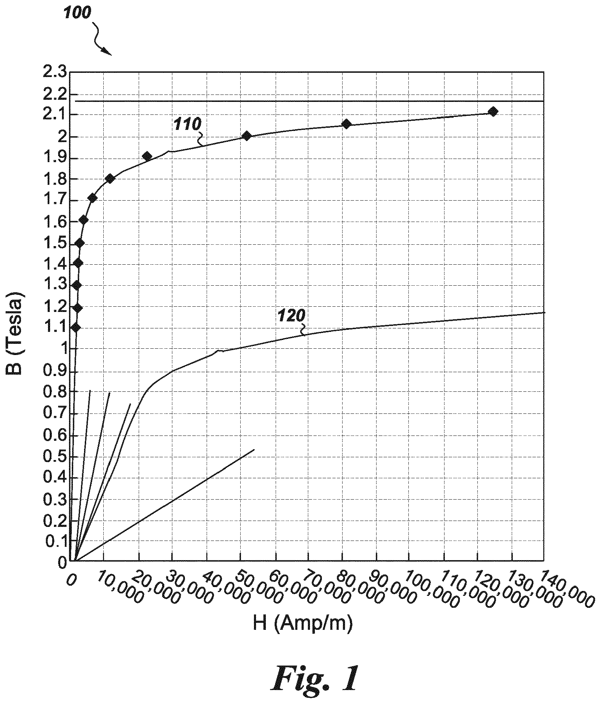

Referring to FIG. 1, an x-y graph comparing magnetic field strength (H in amps/meter), on the x-axis, to flux density (B in tesla), on the y-axis, is depicted as 100. As illustrated, the magnetic properties of some exemplary materials are shown. As the left hand side of the graph shows, the initial permeability is the slope of the curve and can vary depending on the attributes of the material. The curve for a material asymptotically approaches saturation flux density (i.e., near horizontal). As shown the saturation flux density can happen at different levels, depending on the material's properties. Also, materials that have steeper vertical slopes (i.e., higher magnetic permeability) and higher horizontal portions (i.e., higher saturation flux density) generally are more magnetic.

Aspects of the present invention use materials that have dual magnetic phase properties. Dual magnetic phase, or dual-phase, materials include materials that go through a phase change through nitriding at high temperature and materials that go through a phase change through local heat treatment (e.g., via laser). These materials are able to undergo a change in magnetic properties from a first state to a second state, wherein the two states have different magnetic properties. That is the magnetic permeability, saturation flux density, and/or magnetism level changes from the first state to the second state. These dual magnetic phase materials have the ability to have two (or more) states co-exist in the same component. Further, the pattern or magnetic and non-magnetic (or regions of different magnetization levels) can be specified by a machine designer and "written in" to the component during manufacturing. While dual magnetic phase materials may be transitioned from substantially magnetic to substantially non-magnetic, the materials are not only 'binary' in their transitional behavior between magnetism states. That is, depending on the manner of transition, the materials can have their magnetic properties changed greatly, slightly, or any other amount.

For example, referring back to FIG. 1, the dual magnetic phase properties can be transitioned so as to move to virtually any curvature (e.g., initial permeability slope, saturation flux density, etc.) on the graph. Similarly, depending on the shape and configuration of a component made with dual magnetic phase material and the transition that the material has undergone, different locations on the component may have different magnetic properties. By example the magnetic properties of two exemplary materials are shown at 110 and 120, wherein the material at 110 is more magnetic than the material at 120. In the case of a dual magnetic phase material, by example and not limitation, the magnetic property in one (or more) region could switch from, for example, that at 110 to that at 120 by transitioning the dual magnetic phase material.

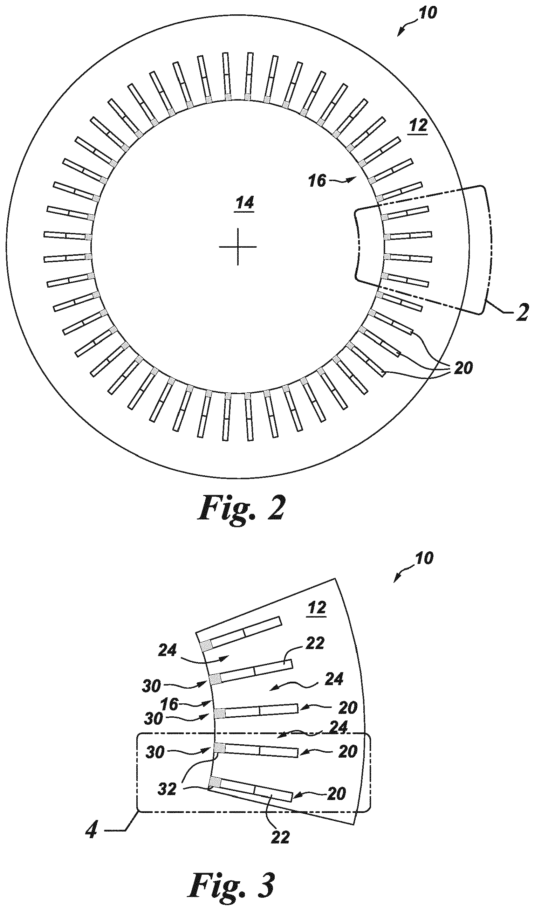

Referring now to FIG. 2, a top view of a stator lamination for an electric machine is depicted. The stator lamination, denoted with a 10, is constructed, at least in part, of a material having a dual magnetic phase property. As discussed, the dual magnetic phase material includes an ability to have magnetic properties in a first state and to have its magnetic properties transitioned to a second state that is different than the first state. The material can be transitioned to a third state, or other states, that are different too than the first state and the second state with regards to its magnetic properties. The material may be transitioned or converted via any suitable method including nitriding, heat treating, and the like.

The stator lamination 10 is configured to have an annulus bore 14 therethrough so as to define a bore edge surface 16 which is adjacent to the annulus bore 14. The lamination face 12 includes a plurality of winding slots 20 disposed around the bore 14. The stator lamination 10 is a monolithic piece made from a single piece of dual magnetic phase material.

Referring collectively to both FIG. 2 and the close up view in FIG. 3, the winding slots 20 are closed wherein a slot closure 30 is disposed between the winding slot 20 and the bore edge surface 16. The slot closures 30 are made of the same material as the balance of the lamination face 12. Because the slot closures 30 and lamination face 12 are monolithic, there are no edges or changes in curvature in the bore edge surface 16. There is no need for wedges. Thus, the bore edge surface 16 of the lamination face 12 has a substantially smooth surface. Disposed between the winding slots are stator teeth 24. A plurality of windings 22 is disposed in the plurality of winding slots 20. The windings 22 may be any suitable type of windings including distributed windings, tooth-concentrated windings, and the like.

A pre-determined location 32 in the area of the top of the winding slot 20 and/or slot closure 30 is treated so as to convert the material to a second state from a first state, wherein the second state is different than the first state. In the second state, the pre-determined location 32 may be non-magnetic and/or less magnetic, lower magnetic permeability, and/or saturation flux density than the first state. That is the relative permeability of the pre-determined locations 32 is lower than the balance of the lamination 12 (i.e., in first state).

In embodiments, the plurality of pre-determined locations 32 may be divided into sets. That is all of the pre-determined locations 32 need not be converted in a similar manner (i.e., all converted from a first state to a second state). For example, the pre-determined locations 32 may be divided into two (or more) sets: a first set and a second set. Then, the first set of pre-determined locations 32 may be converted to a second state and the second set of pre-determined locations 32 may be converted to a third state, wherein the second state and the third state have different magnetic properties from each other and the first state. As one example of these embodiments, alternating slot closures 30 around the bore edge surface 16 could have third state properties side-by-side with slot closures 30 having second state properties.

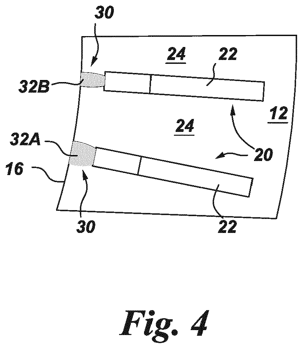

Referring to close up FIG. 4, two winding slots 20 are shown with windings 22 therein. As this particular embodiment depicts, the slot closure 30 region has been transformed to a second (or third) state of magnetism to be non-magnetic or less magnetic than the other portions of the lamination 10 which are in a first state of magnetism. The width of a first predetermined region 32A of one slot closure 30 is wider than the width of the winding slot 20. Conversely, the width of a second predetermined region 32B of one slot closure 30 is narrower than the width of the winding slot 20. Similarly, the magnetic property of the first predetermined region 32A may have the same magnetic property as the second predetermined region 32B (i.e., both a second state). Alternatively, the magnetic property of the first predetermined region 32A may differ from the magnetic property of the second predetermined region 32B so that their magnetic properties are a second state and third state, respectively. In still another embodiment, the magnetic property of the first predetermined region 32A may remain unchanged from the magnetic property of the balance of the lamination 10 (i.e., first state), while only the magnetic property of the second predetermined region 32B is changed to a second state. Clearly, various magnetic property changes including state, location, distribution, size, and the like may be arranged in accordance with the present invention.

A plurality of stator laminations 10 may be stacked together so as to define a stator (not shown). Similarly, a rotor (not shown) may be rotatably disposed within the stator bore 14 of the stator, thereby defining an electric machine (not shown).

Although embodiments shown in FIGS. 2-4 depict a certain slot 20 and tooth configuration, other configurations are possible. For example, the slots may be parallel or non-parallel. Similarly, the stator teeth may be parallel or non-parallel.

The embodiments illustrated and described herein may be used for a variety of electric machine types. For example, electric machines that can benefit include permanent magnet (PM), switched reluctance machine (SRM), synchronous reluctance machine, induction machine (IM), wound field synchronous machine, and the like.

Therefore, according to one embodiment of the present invention, a stator lamination for an electric machine comprises: a circular lamination having an annular bore therethrough; a plurality a winding slots therethrough; and a plurality of slot closures disposed adjacent to the plurality of winding slots, wherein the stator lamination is formed of a dual magnetic phase material, the dual magnetic phase material being having a magnetic property in a first state and a magnetic property in a second state, wherein the magnetic property in the second state is different than the first state, further wherein the plurality of slot closures is treated so as to transition to the second state.

The present invention has been described in terms of the preferred embodiment, and it is recognized that equivalents, alternatives, and modifications, aside from those expressly stated, are possible as far as they do not depart from the scope of the appended claims.

## Claims

1. A stator lamination (10) for an electric machine comprising:
An annular lamination face (12) having a circular bore (14) therethrough; the said bore (14) having a substantially smooth edge surface (16);
a plurality of winding slots (20) disposed around the bore (14); and
a plurality of slot closures (30) disposed between the plurality of winding slots (20) and the edge surface (16),
wherein the stator lamination (10) is a monolithic piece made from a single piece of a magnetic phase material, the magnetic phase material being able to be transitioned from a first state of magnetism, the first state of magnetism having a magnetic property,
to a second state of magnetism, the second state of magnetism having a magnetic property, wherein the magnetic property in the second state of magnetism is different than that in the first state,
the magnetic phase material in the second state of magnetism being non-magnetic or less magnetic than the magnetic phase material in the first state of magnetism, **characterized in that** the plurality of slot closures (30) are further comprising a first set, a second set, and a third set of slot closures (30), wherein the first slot closure (30) set is treated so as to transition to the second state of magnetism and the second slot closure (30) set remains in the first state of magnetism, and wherein the third slot closure (30) set is treated so as to transition to a third state of magnetism, wherein the magnetic property of the third state of magnetism is different than the magnetic property of the first state of magnetism and the second state of magnetism; the magnetic phase material in the third state of magnetism being non-magnetic or less magnetic than the magnetic phase material in the first state of magnetism, and the magnetic property of a first predetermined region (32A) of one of the plurality of slot closures (30), the said first predetermined region (32A) being wider than the width of the respective winding slot (20), differs from the magnetic property of a second predetermined region (32B) of one of the plurality of slot closures (30), the said second predetermined region (32B) being narrower than the width of the respective winding slot (20).

2. The stator lamination (10) of claim 1, wherein the magnetic property comprises magnetic permeability and the magnetic permeability is less in the second state than the first state.

3. The stator lamination (10) of claim 1, wherein the magnetic property comprises saturation flux density, and the saturation flux density is less in the second state than in the first state.

4. The stator lamination (10) of claim 1, wherein the second state is non-magnetic.

5. The stator lamination (10) of claim 1, wherein a bore edge surface (16) of the annular bore (14) is substantially smooth.

6. An assembly comprising a plurality of the stator laminations (10) of claim 1 stacked together to define a stator; and
a plurality of windings (22) disposed in the plurality of winding slots (20).

7. An electric machine comprising
the assembly of claim 6; and
a rotor rotatably disposed within the stator.

## Patentansprüche

1. Statorblech (10) für eine elektrische Maschine, umfassend:
eine kreisförmige Blechfläche (12) mit einer runden hindurchgehenden Bohrung (14); wobei die Bohrung (14) eine im Wesentlichen glatte Kantenfläche (16) hat;
eine Vielzahl von Wicklungsnuten (20), die um die Bohrung (14) angeordnet sind; und
eine Vielzahl von Nutverschlüssen (30), die zwischen der Vielzahl von Wicklungsnuten (20) und der Kantenfläche (16) angeordnet sind,
wobei das Statorblech (10) ein monolithisches Stück ist, das aus einem einzelnen Stück eines Magnetphasenmaterials gemacht ist, wobei das Magnetphasenmaterial fähig ist, aus einem ersten Zustand von Magnetismus, wobei der erste Zustand von Magnetismus eine magnetische Eigenschaft hat, in einen zweiten Zustand von Magnetismus, wobei der zweite Zustand von Magnetismus eine magnetische Eigenschaft hat, überzugehen, wobei sich die magnetische Eigenschaft im zweiten Zustand von Magnetismus von jener im ersten Zustand unterscheidet,
wobei das Magnetphasenmaterial im zweiten Zustand von Magnetismus nicht-magnetisch oder weniger magnetisch ist als das Magnetphasenmaterial im ersten Zustand von Magnetismus, **dadurch gekennzeichnet, dass** die Vielzahl von Nutverschlüssen (30) weiter einen ersten Satz, einen zweiten Satz und einen dritten Satz von Nutverschlüssen (30) umfassen, wobei der erste Satz von Nutverschlüssen (30) behandelt ist, um in den zweiten Zustand von Magnetismus überzugehen, und der zweite Satz von Nutverschlüssen (30) im ersten Zustand von Magnetismus bleibt, und wobei der dritte Satz von Nutverschlüssen (30) behandelt ist, um in einen dritten Zustand von Magnetismus überzugehen, wobei sich die magnetische Eigenschaft im dritten Zustand von Magnetismus von der magnetischen Eigenschaft im ersten Zustand von Magnetismus und zweiten Zustand von Magnetismus unterscheidet; wobei das Magnetphasenmaterial im dritten Zustand von Magnetismus nicht-magnetisch oder weniger magnetisch als das Magnetphasenmaterial im ersten Zustand von Magnetismus ist und sich die magnetische Eigenschaft eines ersten vorbestimmten Bereichs (32A) eines der Vielzahl von Nutverschlüssen (30), wobei der erste vorbestimmte Bereich (32A) breiter ist als die Breite der jeweiligen Wicklungsnut (20), von der magnetischen Eigenschaft eines zweiten vorbestimmten Bereichs (32B) eines der Vielzahl von Nutverschlüssen (30) unterscheidet, wobei der zweite vorbestimmte Bereich (32B) schmaler ist als die Breite der jeweiligen Wicklungsnut (20).

2. Statorblech (10) nach Anspruch 1, wobei die magnetische Eigenschaft magnetische Permeabilität umfasst und die magnetische Permeabilität im zweiten Zustand geringer ist als im ersten Zustand.

3. Statorblech (10) nach Anspruch 1, wobei die magnetische Eigenschaft Sättigungsflussdichte umfasst und die Sättigungsflussdichte im zweiten Zustand geringer ist als im ersten Zustand.

4. Statorblech (10) nach Anspruch 1, wobei der zweite Zustand nicht-magnetisch ist.

5. Statorblech (10) nach Anspruch 1, wobei eine Bohrungskantenfläche (16) der kreisförmigen Bohrung (14) im Wesentlichen glatt ist.

6. Anordnung, umfassend eine Vielzahl der Statorbleche (10) nach Anspruch 1, die aufeinander gestapelt sind, um einen Stator zu definieren; und
eine Vielzahl von Wicklungen (22), die in der Vielzahl von Wicklungsnuten (20) angeordnet sind.

7. Elektrische Maschine, umfassend
die Anordnung nach Anspruch 6; und
einen Rotor, der innerhalb des Stators drehbar angeordnet ist.

## Revendications

1. Tôle magnétique de stator (10) pour une machine électrique comprenant :
une face de tôle magnétique annulaire (12) ayant un alésage circulaire (14) qui la traverse ; ledit alésage (14) ayant une surface de bord sensiblement lisse (16) ;
une pluralité de fentes d'enroulement (20) disposées autour de l'alésage (14) ; et
une pluralité de fermetures de fentes (30) disposées entre la pluralité de fentes d'enroulement (20) et la surface de bord (16),
dans laquelle la tôle magnétique de stator (10) est une pièce monolithique constituée d'une pièce unique d'un matériau de phase magnétique, le matériau de phase magnétique étant à même de passer d'un premier état de magnétisme, le premier état de magnétisme ayant une propriété magnétique, à un second état de magnétisme, le second état de magnétisme ayant une propriété magnétique, dans laquelle la propriété magnétique dans le second état de magnétisme est différente de celle du premier état,
le matériau de phase magnétique dans le second état de magnétisme étant non magnétique ou moins magnétique que le matériau de phase magnétique dans le premier état de magnétisme, **caractérisé en ce que** la pluralité de fermetures de fentes (30) comprend en outre un premier ensemble, un deuxième ensemble et un troisième ensemble de fermetures de fentes (30), dans lequel le premier ensemble de fermetures de fentes (30) est traité de manière à passer au second état de magnétisme et le second ensemble de fermeture de fentes (30) reste dans le premier état de magnétisme, et dans lequel le troisième ensemble de fermeture de fentes (30) est traité de manière à passer dans un troisième état de magnétisme, dans laquelle la propriété magnétique du troisième état de magnétisme est différente de la propriété magnétique du premier état de magnétisme et du deuxième état de magnétisme ; le matériau de phase magnétique dans le troisième état de magnétisme étant non magnétique ou moins magnétique que le matériau de phase magnétique dans le premier état de magnétisme et la propriété magnétique d'une première région prédéterminée (32A) de l'une de la pluralité de fermetures de fentes (30), ladite première région prédéterminée (32A) étant plus large que la fente d'enroulement (20) respective, diffère de la propriété magnétique d'une seconde région prédéterminée (32B) de l'une de la pluralité de fermetures de fentes (30), ladite seconde région prédéterminée (32B) étant plus étroite que la largeur de la fente d'enroulement (20) respective.

2. Tôle magnétique de stator (10) selon la revendication 1, dans laquelle la propriété magnétique comprend la perméabilité magnétique et la perméabilité magnétique est plus basse dans le deuxième état que dans le premier état.

3. Tôle magnétique de stator (10) selon la revendication 1, dans laquelle la propriété magnétique comprend la densité de flux de saturation et la densité de flux de saturation est plus basse dans le deuxième état que dans le premier état.

4. Tôle magnétique de stator (10) selon la revendication 1, dans laquelle le deuxième état est non magnétique.

5. Tôle magnétique de stator (10) selon la revendication 1, dans laquelle une surface de bord (16) de l'alésage annulaire (14) est sensiblement lisse.

6. Ensemble comprenant une pluralité de tôles magnétiques de stator (10) de la revendication 1 empilées conjointement pour définir un stator ; et
une pluralité d'enroulements (22) disposés dans la pluralité de fentes d'enroulement (20).

7. Machine électrique comprenant :
l'ensemble selon la revendication (6) ; et
un rotor monté à rotation dans le stator.
